# EUROPEAN PATENT APPLICATION

(11) **EP 2 548 921 A2**
(43) Date of publication of application: **23.01.2013**
(21) Application number: 11756522.6
(22) Date of filing: 11.03.2011
(51) Int. Cl.: C08L 33/06, C08F 20/18, G02B 1/00, G02B 5/02

(54) **PHOTOCURABLE COMPOSITION, COMPOSITE OPTICAL SHEET FOR BACKLIGHT UNIT WHEREIN LIGHT DIFFUSION SHEET AND PRISM SHEET ARE INTEGRATED, AND PREPARATION METHOD THEREOF**

(30) Priority: 17.03.2010 KR 20100023828
(71) Applicant: Insandigichem Co. Ltd., Kyunggi Do 445-944 (KR)
(72) Inventor: HONG, Soon Young, Gyeonggi-do 445-944 (KR)
(74) Representative: Grünecker, Kinkeldey, Stockmair & Schwanhäusser
(86) International application number: PCT/KR2011/001712
(87) International publication number: WO 2011/115391

(57) **Abstract**

Provided are a photocurable composition, a composite optical film for backlight units including a light-diffusing sheet and a prism sheet formed integrally with the light-diffusing sheet and a method of manufacturing the same. The composite optical film for backlight units includes a prism sheet having a plurality of prism patterns formed on an upper surface thereof so that the plurality of prism patterns are parallel to each other, and a plurality of protrusions formed on leading ends of the plurality of prism patterns of the prism sheet to have a light diffusion function. The composite optical film for backlight units prepared using the photocurable composition can be useful in improving the manufacturing productivity of backlight units and saving the manufacturing cost since the number of manufacturing processes is reduced by replacing two typical sheets of a prism sheet and a light-diffusing sheet with one sheet.

## Description

### BACKGROUND

### 1. Field of the Invention

The present invention relates to a photocurable composition, a composite optical film for backlight units including a light-diffusing sheet and a prism sheet formed integrally with the light-diffusing sheet, and a method of manufacturing the same.

### 2. Discussion of Related Art

A backlight unit configured to illuminate a liquid crystal layer to emit light is provided in a rear surface of a liquid crystal layer of a liquid crystal display device.

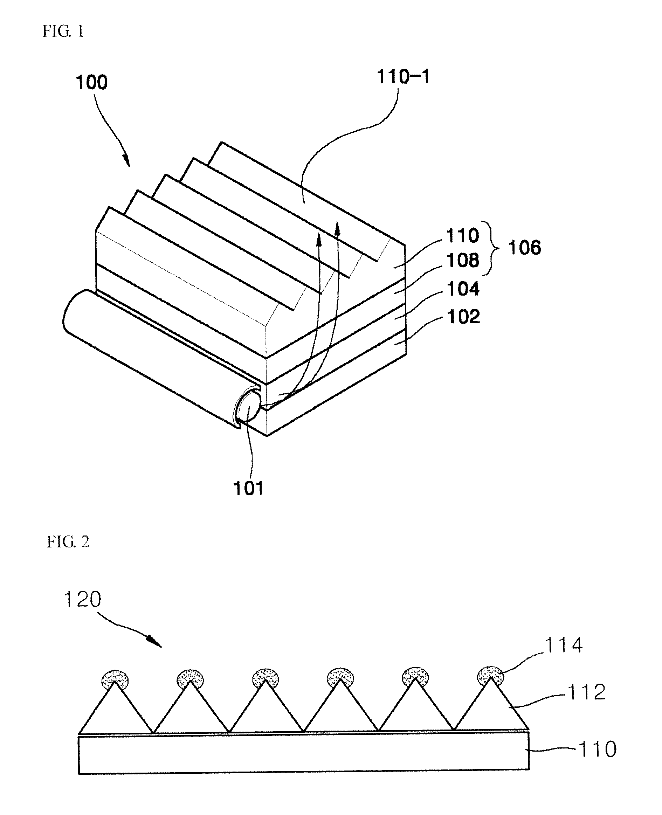

Backlight units may be classified into edge light-type and direct-type backlight units. FIG. 1 shows an edge light-type backlight unit 100. Referring to FIG. 1, the edge light-type backlight unit 100 includes a rod-shaped cold cathode fluorescent lamp 101 serving as a light source, a tetragonal planar light guide plate 104 disposed at the fluorescent lamp 101 so that lamp 101 can be arranged along an end portion thereof a plurality of optical sheets 106 stacked on a front surface of the light guide plate 104, and a reflection sheet 102 stacked on a rear surface of the light guide plate 104. The optical sheets 106 is composed of a light-diffusing sheet 108 disposed on the front surface of the light guide plate 104 and a prism sheet 110 disposed on a front surface of the light-diffusing sheet 108.

Functions of the backlight unit 100 are as follows. First, rays of light incident on the light guide plate 104 from the fluorescent lamp 101 are reflected on reflection dots (not shown) of the rear surface of the light guide plate 104 and lateral surfaces of the light guide plate 104, and emitted from the entire surfaces of the light guide plate 104. As described above, the light guide plate 104 functions as a surface light source. The rays of light emitted from the light guide plate 104 are incident on and diffused through the light-diffusing sheet 108, and emitted from a surface of the light-diffusing sheet 108. The rays of light emitted from the light-diffusing sheet 108 are incident on the prism sheet 110, concentrated in a direction substantially perpendicular to a surface of the prism sheet 110, and emitted by means of the prism patterns 110-1 formed on the surface of the prism sheet 110. That is, the rays of light emitted from the fluorescent lamp 101 are diffused by means of the light-diffusing sheet 108, and concentrated in a direction substantially perpendicular to the surface of the prism sheet 110 by means of the prism sheet 110. Thereafter, an entire surface of a liquid crystal layer (not shown) formed on the light-diffusing sheet 108 is illuminated with the rays of light. As described above, the light-diffusing sheet 108 functions to diffuse light generated from a light source to prevent the light source from being invisible and maintain the luminance of an entire screen without causing damage to the brightness of the light source. The prism sheet 110 functions to refract and concentrate light passed through the light-diffusing sheet 108 so that the light can be uniformly incident on an entire surface of a liquid crystal display device.

A direct-type backlight unit has the same structure as the edge light-type backlight unit 100, except that the fluorescent lamp 101 is disposed just after the optical sheet 106 and the light guide plate 104 is not provided.

As described above, however, the optical sheet 106 has a bilayered structure including the light-diffusing sheet 108 and the prism sheet 110, which are separately manufactured. Therefore, there is a demand for developing an integral optical sheet that has a simple structure and can simplify a manufacturing process so as to reduce the cost caused by the use of the separate light-diffusing sheet and prism sheet.

### SUMMARY OF THE INVENTION

The present invention is directed to a photocurable composition capable of being used to manufacture a composite optical film having a combination of a light diffusion function and a prism sheet function so as to prevent a decrease in manufacturing productivity and/or an increase in cost, which are/is caused by the use of separate light-diffusing and prism sheets in manufacture of a backlight unit.

The present invention is also directed to a composite optical film for backlight units having a combination of a light diffusion function and a prism sheet function

In addition, the present invention is directed to a method of manufacturing a composite optical film for backlight units.

According to an aspect of the present invention, there is provided a photocurable composition including 60 parts by weight of a (meth)acrylate oligomer having a number average molecular weight of 1,000 to 5,000 and containing 1 to 6 (meth)acrylate moieties, 20 to 40 parts by weight of a (meth)acrylate-based monomer having a molecular weight of less than 1,000 and containing 1 to 6 (meth)acrylate moieties, and 0.5 to 8 parts by weight of a photopolymerization initiator, based on 60 parts by weight of the (meth)acrylate oligomer. Here, the photocurable composition is coated on leading ends of the prism patterns of the prism sheet for backlight units, and photocured to form protrusions having a light diffusion function on the leading ends of the prism patterns.

According to another aspect of the present invention, there is provided a composite optical film for backlight units including a prism sheet having a plurality of prism patterns formed on an upper surface thereof so that the plurality of prism patterns are parallel to each other, and a plurality of protrusions formed on leading ends of the plurality of prism patterns of the prism sheet to have a light diffusion function. Here, the protrusions having a light diffusion function are cured products of the photocurable composition including the following components: 60 parts by weight of a (meth)acrylate oligomer having a number average molecular weight of 1,000 to 5,000 and containing 1 to 6 (meth)acrylate moieties, 20 to 40 parts by weight of a (meth)acrylate-based monomer having a molecular weight of less than 1,000 and containing 1 to 6 (meth)acrylate moieties, and 0.5 to 8 parts by weight of a photopolymerization initiator, based on 60 parts by weight of the (meth)acrylate oligomer.

According to still another aspect of the present invention, there is provided a method of manufacturing a composite optical film for backlight units. The method includes forming a photocurable resin layer on one surface of a polymeric film, forming a prism sheet having a plurality of prism patterns formed on an upper surface thereof, so that the plurality of prism patterns are parallel to each other, by irradiating the photocurable resin layer with first active light to cure the resin layer while allowing the photocurable resin layer to pass through a roller having prism patterns, passing the prism sheet, which passes through the roller having the prism patterns, through a coating roller whose surface is coated with the photocurable composition, wherein leading ends of the prism patterns passes through the coating roller so that the leading ends of the prism patterns come in contact with the photocurable composition coated on the coating roller, and forming a plurality of protrusions having a light diffusion function on the leading ends of the plurality of prism patterns of the prism sheet by irradiating the photocurable composition coated on the leading ends of the prism patterns with second active light to cure the photocurable composition. Here, the photocurable composition includes the following components: 60 parts by weight of a (meth)acrylate oligomer having a number average molecular weight of 1,000 to 5,000 and containing 1 to 6 (meth)acrylate moieties, 20 to 40 parts by weight of a (meth)acrylate-based monomer having a molecular weight of less than 1,000 and containing 1 to 6 (meth)acrylate moieties, and 0.5 to 8 parts by weight of a photopolymerization initiator, based on 60 parts by weight of the (meth)acrylate oligomer.

As a resin dissolved in the (meth)acrylate-based monomer, the photocurable composition may further include 1 to 10 parts by weight of at least one resin selected from the group consisting of a methyl methacrylate-butyl (meth)acrylate copolymer, polyester polyurethane, chlorosulfonated polyethylene, chlorinated polyvinyl chloride (PVC), polystyrene, a vinyl chloride-vinyl acetate copolymer, and a butylmethacrylate-methacrylic acid copolymer.

The (meth)acrylate oligomer may be at least one selected from the group consisting of an ester-based (meth)acrylate, an epoxy-based (meth)acrylate and a urethane-based (meth)acrylate.

The photocurable composition may further include 0.5 parts by weight to 5 parts by weight of at least one adhesion promoter selected from the group consisting of acrylic acid and methoxyphenol.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a perspective view showing a typical edge light-type backlight unit 100;
FIG. 2 is a cross-sectional view of a composite optical film for backlight units according to one exemplary embodiment of the present invention;
FIG. 3 is a schematic diagram explaining a method of manufacturing a composite optical film for backlight units according to one exemplary embodiment of the present invention; and
FIG. 4 is an optical microscope image taken of prism patterns of a composite optical film A.

### DETAILED DESCRIPTION OF EXEMPLARY EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the spirit and scope of the invention.

The photocurable composition according to exemplary embodiment of the present invention includes 60 parts by weight of a (meth)acrylate oligomer having a number average molecular weight of 1,000 to 5,000, 20 to 40 parts by weight of a (meth)acrylate-based monomer having a molecular weight of less than 1,000 and containing 6 or less (meth)acrylate moieties, and 0.5 to 8 parts by weight of a photopolymerization initiator, based on 60 parts by weight of the (meth)acrylate oligomer.

The composition may be coated on leading ends of prism patterns of the prism sheet for backlight units, and photocured to form protrusions having a light diffusion function on the leading ends of the prism patterns.

The photocurable composition includes a (meth)acrylate oligomer having a number average molecular weight of 1,000 to 5,000. The oligomer may be at least one selected from the group consisting of an ester-based (meth)acrylate in which a (meth)acrylate group is bound to a moiety containing an ester bond, an epoxy-based (meth)acrylate in which a (meth)acrylate group is bound to a moiety containing an epoxy group, and a urethane-based (meth)acrylate in which a (meth)acrylate group is bound to a moiety containing a urethane bond. For example, the oligomer used herein may includes a polyester-based (meth)acrylate obtained by introducing a (meth)acrylate group into a polyester structure obtained by condensation of polybasic acid and trihydric alcohol, an epoxy-based (meth)acrylate having excellent heat resistance and adhesive property, which is obtained by introducing a (meth)acrylate group into an epoxy resin, and a urethane-based (meth)acrylate that may be formed in a tough thin film due to a coagulation effect through a hydrogen bond, a van der Waals bond, etc. To improve the initial strength of a cured film, a mixture of at least two oligomers may be used. For example, the urethane-based (meth)acrylate oligomer is generated by reaction of a (meth)acrylate compound with a diisocyanate compound and polyol. Examples of the diisocyanate may include 2,4-toluene diisocyanate, 1,3-xylene diisocyanate, 1,4-xylene diisocyanate, hexamethylene diisocyanate, isoporon diisocyanate, etc. Also, examples of the polyol used herein may include polyester polyol, polyether polyol, a liquid-phase butadiene rubber having a hydroxyl group bound to an end thereof, etc. The preferred oligomer is an epoxy-based (meth)acrylate oligomer, and may be prepared by reaction of a (meth)acrylate having a hydroxyl group with a diisocyanate compound such as 2,4-toluene diisocyanate or hexamethylene diisocyanate and a hydroxyl compound such as polypropylene glycol or a liquid-phase butadiene rubber having a hydroxyl group bound to an end thereof. In addition, a polyether-based (meth)acrylate, a spiran resin-based (meth)acrylate and a silicon resin-based (meth)acrylate may be used as the (meth)acrylate oligomer. A cured film formed from the composition including the above-described (meth)acrylate oligomer is so transparent to transmit approximately 85% of light. Also, the cured film has weather resistance and a certain level of stiffness, and can be colored to a wide extent. Here, the (meth)acrylate is generally referred to as an acrylate and methacrylate.

The oligomer may be dissolved in the (meth)acrylate-based monomer, and may contain 1 to 6 or less (meth)acrylate moieties in one molecular structure. The oligomer serves as a base for the photocurable composition, which is obtained by introducing a (meth)acrylate-based reactive group to an oligomer having a proper molecular weight and chemical structure to provide a photopolymerization property. The adhesive strength and hardness of the cured film depend on the molecular design of such an oligomer. For example, when the number of (meth)acrylates in the molecular structure of the oligomer is small, the adhesive strength of the cured film to a substrate increases but the hardness decreases. On the other hand, when the number of (meth)acrylates is high, the reverse results are observed.

When a content of the oligomer is less than the ratio, the cured film may be cracked due to its weak hardness, whereas, when the content of the oligomer exceeds the ratio, the viscosity of the composition may be excessively increased, the adhesive strength to films may also be lowered, and the compatibility with other components may be degraded.

The oligomer may have a number average molecular weight of less than 10,000, preferably 1,000 to 5,000, and, more preferably 1,000 to 2,000. When the number average molecular weight of the oligomer is less than 1,000, it is difficult to maintain adhesive strength of the composition and basic physical properties of the cured film such as proper hardness and elasticity. On the other hand, when the number average molecular weight of the oligomer exceeds 5,000, a curing rate of the composition may be decreased, and the workability of the composition may be degraded due to its excessively increased viscosity. Also, the physical properties of the composition may not be controlled by addition of the (meth)acrylate monomer.

The photocurable composition includes 20 to 40 parts by weight of a (meth)acrylate-based monomer having a molecular weight of less than 1,000 and containing 6 or less (meth)acrylate moieties, based on 60 parts by weight of the oligomer.

The (meth)acrylate monomer may be a mixture of (meth)acrylate monomers having a molecular weight of 100 to 800 in aspect of the viscosity control and solubility maintenance. Also, the (meth)acrylate monomer may be a mixture of (meth)acrylate monomers having 1 to 6 (meth)acrylate groups, preferably 2 to 6 (meth)acrylate groups. That is, the (meth)acrylate monomer may be a monofunctional, difunctional, trifunctional, tetrafunctional, pentafunctional or hexafunctional (meth)acrylate monomer.

Specific examples of the monofunctional (meth)acrylate may include hydroxyethyl(meth)acrylate, hydroxypropyl(meth)acrylate, hydroxybutyl(meth)acrylate, hydroxypentyl(meth)acrylate, hydroxyhexyl(meth)acrylate, phenoxyethyl(meth)acrylate, o-phenylphenoxyethyl(meth)acrylate, 2-ethylhexyl(meth)acrylate, octyldecyl(meth)acrylate, stearyl(meth)acrylate, behenyl(meth)acrylate, β-carboxyethyl(meth)acrylate, isobornyl(meth)acrylate, tetrahydrofurfuryl(meth)acrylate, tetrahydrofurfuryl methacrylate, 4-butylcyclohexyl(meth)acrylate, dicyclopentenyl(meth)acrylate, dicyclopentenyloxyethyl(meth)acrylate, ethoxyethyl(meth)acrylate, ethoxylated mono(meth)acrylate , etc.

Specific examples of the di- to hexa-functional (meth)acrylates includes a difunctional monomer such as trimethylolpropane dially ether, pentaerythritol triallyether, trimethylolpropane di(meth)acrylate, triethylolpropane di(meth)acrylate, glycerol di(meth)acrylate, pentaerythritol tri(meth)acrylate, dipentaerythritol hydroxypenta(meth)acrylate, dipentaerythritol penta(meth)acrylate, 1,6-hexanediol di(meth)acrylate, triphenylglycol di(meth)acrylate, butanediol di(meth)acrylate, 1,3-butyleneglycol dimethacrylate, neopentylglycol di(meth)acrylate, ethyleneglycol dimethacrylate, diethyleneglycol di(meth)acrylate, tetraethyleneglycol di(meth)acrylate, triethyleneglycol di(meth)acrylate, polyethyleneglycol di(meth)acrylate, dipropyleneglycol di(meth)acrylate, methoxylatedneopentylglycol di(meth)acrylate, and ethoxylatedneopentylglycol di(meth)acrylate, trimethylolpropane tri(meth)acrylate, pentaerythritol tri(meth)acrylate, ethoxylated trimethylolpropane tri(meth)acrylate, propylated trimethylolpropane tri(meth)acrylate, glyceryl propylated tri(meth)acrylate, tri(2-hydroxyethyl)isocyanurate tri(meth)acrylate, ditrimethylolpropane tetra (meth)acrylate, alkoxylated tetra (meth)acrylate, pentaerythritol tetra (meth)acrylate, etc.

Since the photocurable resin can be photocured within a short period of time using ultraviolet (UV) rays or electron beams, a large amount of a solvent may be used. However, since the excessively high viscosity of the composition has a bad influence on the thickness and processing conditions of a thin film, the viscosity should be controlled. Thus, a (meth)acrylate monomer having a lower viscosity than the oligomer may be used to control the viscosity. The low-viscosity monomer has effects of enhancing the hardness of the cured film, showing ease of coating on a substrate, and improving the adhesive strength to a subject. As described above, the monofunctional, difunctional, and multifunctional monomers may be classified according to the number of (meth)acrylate groups present in one molecule. The number of crosslinking linkages increases with an increase in content of the multifunctional monomer. However, when the content of the tetra- or more functional monomers is too high, a shrinkage rate may increase due to an extreme increase in crosslinking density, and thus, the cured thin film may be cracked.

A content of the low-viscosity (meth)acrylate monomer may be in a range of 20 to 40 parts by weight, based on 60 parts by weight of the oligomer. When the content of the low-viscosity (meth)acrylate monomer is less than 20 parts by weight, the composition according to the present invention has a highly increased viscosity. As a result, it is difficult to control a thickness of the coated film during coating of the composition, and the hardness of the cured film and the adhesive strength to a substrate may be degraded. When the content of the low-viscosity (meth)acrylate monomer exceeds 40 parts by weight, a photocuring rate may be lowered, and the elasticity of the cured film may be degraded, and thus cracks may be generated.

The composition may further include 1 to 10 parts by weight of at least one resin selected from the group consisting of a methyl methacrylate-butyl (meth)acrylate copolymer, polyester polyurethane, chlorosulfonated polyethylene, chlorinated PVC, a polystyrene, vinyl chloride-vinyl acetate copolymer, and a butylmethacrylate-methacrylic acid copolymer as a resin dissolved in the (meth)acrylate-based monomer. These resins may be dissolved in the (meth)acrylate monomer. The kinds of these resins are used to control the adhesive strength of the composition according to the present invention, depending on the kind of primers treated onto a prism pattern surface of the prism sheet serving as a substrate. When a content of the resin is in a range of 1 to 10 parts by weight based on 60 parts by weight of the oligomer, the adhesive strength of the composition may be controlled to a proper extent, depending on the kind of substrates.

The photocurable composition according to the present invention further includes 0.5 to 8 parts by weight of a photopolymerization initiator. When the photopolymerization initiator is included within this content range, proper curing rate and curing rate, and the hardness of the cured film may be achieved. When the content of the photopolymerization initiator is less than 0.5 parts by weight, the desired surface properties of the cured thin film may be achieved due to the lowered curing rate and low curing degree, or the cured thin film may not completely cured. On the other hand, when the content of the photopolymerization initiator exceeds 8 parts by weight, the cured thin film may be excessively cured, thereby causing a decrease in adhesion to a substrate. Also, the photocurable composition according to the present invention may further include a photosensitizer. Here, a content of the photosensitizer may be in a range of 0.1 to 5 parts by weight, based on 60 parts by weight of the oligomer.

The photopolymerization initiator cuts a weaker portion in a chemical bond using a light energy dose to form free radicals, which initiate chain radical polymerization reaction of the oligomer and the monomer, when the composition is irradiated with active light such as UV rays and electron beams. The composition according to the present invention may be photocured in the absence of the photoinitiator. In this case, when the composition does not include a photocuring agent, a curing time may be lengthened. Thus, the prism sheet that is a substrate may be deformed, and a curing degree may be low, which leads to degraded hardness characteristics of a photocured film. As a result, the photopolymerization initiator should be used herein. When the composition includes a photoinitiator, a curing rate and a curing degree may be improved due to photopolymerization, thereby solving the above-described problems.

The widely used photopolymerization initiator may be at least one or a mixture of two or more selected from the group consisting of chloroacetophenone, diethoxyacetophenone, hydroxyacetophenone, 1 -phenyl-2-hydroxy-2-methylpropane-1-one, 1-hydroxycyclohexyl phenyl ketone, α-aminoacetophenone, benzoin ether, benzyl dimethyl ketal, benzophenone, thioxanthone, 2-ethyl anthraquinone, 2-hydroxy-1,2-diphenyl ethanone, 2-ethoxy-1,2-diphenyl ethanone, 2,2-dimethoxy-1,2-diphenyl ethanone, 2-isopropyl-1,2-phenyl ethanone, 2-butoxy-1,2-diphenyl ethanone, 2-isobutoxy-1,2-diphenyl ethanone, 2,2-dimethoxy-1,2-diphenyl ethanone, 2,2-dibutoxy 1-phenyl ethanone, dimethoxy hydroxy acetophenone, 1-(4-isopropyl phenyl)-2-hydroxy-2-methylpropanone, 2-methyl-1-[4-(methylthio)phenyl]-2-morpholinopropanone, 2-benzyl-2-dimethyl amino-1-(4-morpholinophenyl)butanone and 3,6-bis[2-methyl]-2-morpholino(propanonyl)-butyl carbazole. In addition to these components, typical photopolymerization initiators may be used without limitation as long as they can become active by irradiation with UV rays.

The photocurable composition may further include 0.5 parts by weight to 5 parts by weight of at least one adhesion promoter selected from the group consisting of acrylic acid and methoxyphenol, based on 60 parts by weight of the oligomer.

The photocurable resin composition according to the present invention may further include a thixotropic agent in which modified urea is dissolved in N-methylpyrrolidone. A suitable content of the thixotropic agent is in a range of 0.1 to 5 parts by weight, based on 60 parts by weight of the oligomer.

The photocurable composition may meet all of various conflicting requirements, such as low shrinkage rate, high adhesive strength, high cured product hardness, high curing rate and good light diffusion effect, by combining various components having the above-described compatibility.

A shrinkage rate of the photocurable composition after photocuring may be 7% or less, preferably 5% or less.

Next, the composite optical film for backlight units according to another exemplary embodiment of the present invention will be described in further detail.

FIG. 2 is a cross-sectional view of a composite optical film for backlight units according to another exemplary embodiment of the present invention. Referring to FIG. 2, the composite optical film 120 includes a prism sheet 110 having a plurality of prism patterns 112 formed on an upper surface thereof so that the plurality of prism patterns 112 are parallel to each other, and a plurality of protrusions 114 formed on leading ends of the plurality of prism patterns 112 of the prism sheet 110 to have a light diffusion function. The prism pattern 112 may be in a triangular pyramid, hemispheric, quadrangular pyramid, pentagonal pyramid shape.

The protrusions 114 having a light diffusion function are the cured products of the photocurable composition according to one exemplary embodiment of the present invention as described above. The prism sheet 110 may be formed of a polyester resin such as polyethylene terephthalate (PET) or a polycarbonate resin. The protrusions 114 formed on the prism pattern 112 may be in a spherical, hemispheric, oval-spherical shape. The longest diameters of the protrusions are not limited as long as the protrusions 114 formed on the leading ends of the adjacent prism patterns 112 are independently present with no contact with each other. In general, a diameter of the protrusions may be in a range of 15 to 30 µm, for example, 20 to 25 µm.

Subsequently, an operation of the composite optical film for backlight units according to the present invention will be described. The composite optical film 120 according to the present invention is obtained by integrating the light-diffusing sheet 108 and the prism sheet 110 of the typical optical sheet shown in FIG. 1 into one composite optical film 120. Light passed through a light guide plate or light reaching the prism sheet 110 of the composite optical film 120 without passing through the light guide plate in the case of the direct-type backlight unit is incident on the prism sheet 110. Then, by means of the prism patterns 112 formed on the surface of the prism sheet 110, the light is concentrated in a direction substantially perpendicular to a surface of the prism sheet 110, and then emitted. Light emitted in the perpendicular direction is diffused while passing through the protrusions 114 so as to satisfy the requirements such as luminance and viewing angle, which are required for the backlight unit. As described above, since the composite optical film for backlight units according to the present invention does not have the necessity of separately using the prism sheet and the light-diffusing sheet, the workability and productivity may be improved in assembly of the backlight unit.

Then, the method of manufacturing a composite optical film for backlight units according to still another exemplary embodiment of the present invention will be described in further detail.

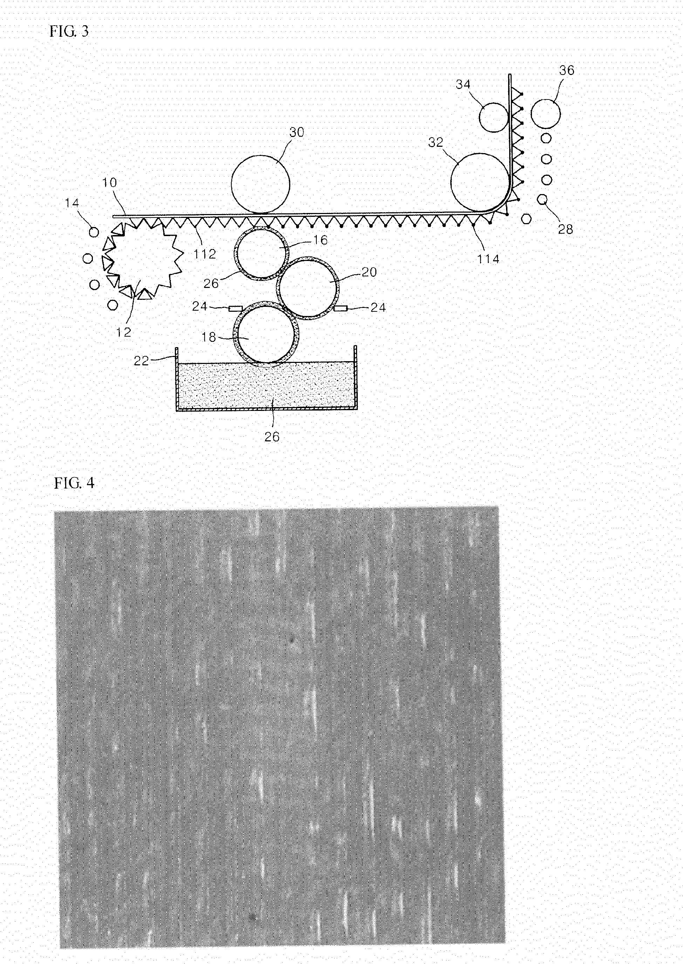

FIG. 3 is a schematic diagram explaining a method of manufacturing a composite optical film for backlight units according to still another exemplary embodiment of the present invention. Referring to FIG. 3, a photocurable resin layer (not shown) is formed on one surface of the polymeric film 10 such as a polyester film or a polycarbonate film. When the photocurable resin layer is passed through a roller 12 having prism patterns, the photocurable resin layer is irradiated with first active light using a first active light irradiation device 14. For example, the first active light may be light from a UV lamp having an energy dose of 100 mJ/cm² to 1,000 mJ/cm². Therefore, the photocurable resin layer is cured to form a prism sheet having a plurality of prism patterns 112 which are parallel to each other. A cross section of each of the prism patterns may be in a triangular, semicircular, or oval shape. In this case, a moving rate of the prism sheet may be in a range of approximately 1 to 10 m/min.

The prism sheet passed through the roller 12 having the prism patterns passes through a coating roller 16. In this case, the leading ends of the prism patterns are arranged so that the leading ends of the prism patterns can come in contact with the photocurable composition according to the present invention coated on the coating roller 16. A surface of the coating roller 16 is coated with the photocurable composition fed through a lower feed roller 18 and an upper feed roller 20 from a tank 22 filled with the photocurable composition 26 according to the present invention. A drum roller 30 is disposed opposite to the coating roller 16 to guide the polymeric film 10. A coating thickness adjustment device 24 is installed on each of the lower feed roller 18 and the upper feed roller 20 to uniformly control a layer thickness of the supplied photocurable composition according to the present invention. Therefore, when the prism sheet passes through the coating roller 16, the leading ends of the prism patterns 112 comes in contact with the photocurable composition according to the present invention coated on the coating roller 16. As a result, the photocurable composition according to the present invention is uniformly attached onto the leading ends of the prism patterns 112 of the prism sheet 110 to form the protrusions 114. Thereafter, the photocurable composition is cured by irradiating the protrusions 114 with the second active light from the second active light irradiation device 28, thereby forming protrusions 114 having a light diffusion function on the leading ends of the prism pattern 112 of the prism sheet 110. Laminating rolls 32, 34 and 36 function to apply a certain pressure to the polymeric film 10 to laminate the polymeric film 10 and the prism pattern 112. As described above, the manufacture of the composite optical film according to the present invention is completed. For example, the second active light may be light from a UV lamp having an energy dose of 500 mJ/cm² to 2,000 mJ/cm², for example, 800 mJ/cm² to 1,500 mJ/cm² or 1,100 mJ/cm² to 1,300 mJ/cm². As a result, since the protrusions 114 having a light diffusion function are formed on the leading ends of the prism patterns 112, the composite optical film in which the prism sheet and the light-diffusing sheet are is integrated into one sheet may be obtained. In this case, the composite optical film may have both of light concentration and light diffusion characteristics.

Hereinafter, the present invention will be described in further detail with reference to following examples. However, the description disclosed herein is merely a preferable example for the purpose of illustration only, and is not intended to limit the scope of the invention. Therefore, it should be understood that other equivalents and modifications could be made thereto without departing from the scope of the invention, as apparent to those skilled in the art to which the present invention belongs.

### EXAMPLES

### Preparation Example: Preparation of photopolymerizable compositions A to G

The components having contents listed in the following Table 1 were uniformly mixed to prepare photocurable compositions A to G according to the present invention. First, all the components rather than a photoinitiator were mixed in a mixing tank equipped with a stirrer, and stirred thoroughly for approximately 4 hours. Finally, after a photoinitiator (Irgacure 184, Irgacure 651, and t-butyl perbenzoate) was added, the resulting mixture was stirred for additional 1 hour, and defoamed using a vacuum pump, thereby preparing photocurable compositions A to G.

**Table 1**

| Component | composition A | Composition B | Composition C | Composition D | Composition E | Composition F | Composition G |
|---|---|---|---|---|---|---|---|
| Ebecryl^{®} 600 (g) | 60 | 60 | 60 | 60 | 60 | 60 | 60 |
| DPHA (g) | 50 | 50 | 50 | 50 | - | - | - |
| IBA (g) | 200 | - | - | - | - | 40 | - |
| IBMA (g) | - | 200 | - | - | - | - | 40 |
| DPOEA (g) | - | - | 200 | - | - | - | - |
| DPOEMA (g) | - | - | - | 200 | - | - | - |
| THFA (g) | 50 | - | - | | 340 | - | - |
| THFMA (g) | - | 50 | - | - | - | 340 | - |
| MCOEA (g) | - | - | 50 | - | - | - | 34 0 |
| SR-350 (g) | 80 | 80 | 80 | 80 | 40 | 40 | 40 |
| Irgacure 184 (g) | 33 | 3 3 | 33 | 3 3 | 33 | 33 | 33 |
| Irgacure 651 (g) | 07 | 07 | 07 | 07 | 07 | 07 | 07 |
| t-butyl perbenzoate (g) | 02 | 02 | 02 | 02 | 02 | 02 | 02 |
| Polyethylene (g) | 2 | 2 | 2 | 2 | 2 | 2 | 2 |
| Chlormated PVC (g) | 3 | 3 | 3 | 3 | 3 | 3 | 3 |
| acrylic acid (g) | 08 | 08 | 08 | 08 | 08 | 08 | 08 |
| p-methoxyphenol(g) | 01 | 01 | 01 | 01 | 01 | 01 | 01 |
| Texaphor P-61 (g) | 04 | 04 | 04 | 04 | 04 | 04 | 04 |

Among the components listed in Table 1, the compounds represented by English acronyms are as follows:
Ebecryl^{®} 600: an epoxy acrylate oligomer commercially available from Cytec Industries Inc.
DPHA: dipentaerythritol pentaacrylate
IBA: isobornyl acrylate
IBMA: isobornyl methacrylate
DPOEA: 2-(dicyclopentenyloxy)ethyl acrylate
DPOEMA: 2-(dicyclopentenyloxy)ethyl methacrylate
THFA: tetrahydrofurfuryl acrylate
THFMA: tetrahydrofurfuryl methacrylate
MCOEA: methacarbonyl oxyethyl acrylate
SR-350: trimethylolpropane trimethacrylate
Irgacure 184: a photoinitiator commercially available from Ciba Specialty Chemicals
Irgacure 651: a photoinitiator commercially available from Ciba Specialty Chemicals
Texaphor P-61: a polyurethane-based wetting and dispersing agent commercially available from Cognis

### Example 1

A composite optical film was prepared using the device and method descried in FIG. 3.

That is, one surface of a polyethylene terephthalate (PET) film 10 was coated with a resin composition, which included 28 g of o-phenylphenoxyethyl acrylate, 5 g of dipentaerythritol hydroxypentaacrylate, 51 g of phenoxyethyl acrylate, 10 g of hydroxypropyl methacrylate, 1 g of α-amino acetophenone, 3 g of 1-hydroxy cyclohexyl phenyl ketone, 0.06 g of titanium oxide, 0.1 g of TEXAPHOR P-61 (commercially available from COGNIS) and 1.84 g of TEXAPHOR P-63 (commercially available from COGNIS), to form a photocurable resin layer having a thickness of approximately 80 µm. The photocurable resin layer was irradiated with a first UV lamp having an energy dose of 800 mJ/cm² for approximately 10 seconds while the photocurable resin layer passed through the roller 12 having prism patterns. A cross section of each of the prism patterns was in a triangular shape to have a height of approximately 80 µm. As a result, the photocurable resin layer was cured to form a prism sheet having a plurality of prism patterns 112 formed on an upper surface thereto so that the plurality of prism patterns 112 are parallel to each other. In this case, a moving rate of the prism sheet was adjusted to approximately 5 m/min.

The prism sheet that was passed through the roller 12 having the prism patterns passed through the coating roller 16. In this case, the leading ends of the prism patterns come in contact with the photocurable composition A coated onto the coating roller 16. As a result, the photocurable composition A was attached onto the leadings ends of the prism patterns 112 of the prism sheet 110 to form the protrusions 114. Subsequently, the photocurable composition was cured by irradiating the protrusions 114 for approximately 10 seconds using a second UV lamp 26 having an energy dose of 1,200 mJ/cm², thereby forming spherical protrusions 114 having a light diffusion function on the leading ends of the prism pattern 112 of the prism sheet 110. The longest diameters of the spherical protrusions were measured using an electron microscope. As a result, the diameters of the spherical protrusions were in a range of approximately 20 to 25 µm.

As described above, the composite optical film A according to the present invention having both of the light concentration and light diffusion characteristics was prepared as one integrated sheet.

FIG. 4 is an optical microscope image taken of prism patterns of a composite optical film A. From the image, it could be confirmed that the plurality of protrusions 114 indicated by bright white marks are formed.

### Example 2

A composite optical film B according to the present invention having both of the light concentration and light diffusion characteristics was prepared as one integrated sheet in the same manner as described in Example 1, except that the photocurable composition B was used instead of the photocurable composition A as the photocurable composition for forming light diffusion protrusions 114. As a result the longest diameters of the spherical protrusions were in a range of approximately 20 to 25 µm.

### Example 3

A composite optical film C according to the present invention having both of the light concentration and light diffusion characteristics was prepared as one integrated sheet in the same manner as described in Example 1, except that the photocurable composition C was used instead of the photocurable composition A as the photocurable composition for forming light diffusion protrusions 114. As a result the longest diameters of the spherical protrusions were in a range of approximately 20 to 25 µm.

### Example 4

A composite optical film D according to the present invention having both of the light concentration and light diffusion characteristics was prepared as one integrated sheet in the same manner as described in Example 1, except that the photocurable composition D was used instead of the photocurable composition A as the photocurable composition for forming light diffusion protrusions 114. As a result the longest diameters of the spherical protrusions were in a range of approximately 20 to 25 µm.

### Comparative Example 1

A composite optical film according to the present invention having both of the light concentration and light diffusion characteristics tried to be prepared as one integrated sheet in the same manner as described in Example 1, except that the photocurable composition E was used instead of the photocurable composition A as the photocurable composition for forming light diffusion protrusions 114. However, no protrusions having a sufficient size to show sufficient light diffusion characteristics were formed due to the very low viscosity of the photocurable composition.

### Comparative Example 2

A composite optical film according to the present invention having both of the light concentration and light diffusion characteristics tried to be prepared as one integrated sheet in the same manner as described in Example 1, except that the photocurable composition F was used instead of the photocurable composition A as the photocurable composition for forming light diffusion protrusions 114. However, no protrusions having a sufficient size to show sufficient light diffusion characteristics were formed due to the very low viscosity of the photocurable composition.

### Comparative Example 3

A composite optical film according to the present invention having both of the light concentration and light diffusion characteristics tried to be prepared as one integrated sheet in the same manner as described in Example 1, except that the photocurable composition G was used instead of the photocurable composition A as the photocurable composition for forming light diffusion protrusions 114. However, no protrusions having a sufficient size to show sufficient light diffusion characteristics were formed due to the very low viscosity of the photocurable composition.

The chromaticities and luminances of the integral composite optical films prepared in Examples 1 to 4 were compared with those of Serial Nos. BEF #1, BEF #2, and BEF #3 which were stacked bodies including a prism sheet currently commercially available from 3M and a light diffusing film formed on the prism sheet. The results are summarized and listed in the following Tables 2 and 3.

The chromaticities and luminances listed in Tables 2 and 3 were measured, as follows.

### (1) Chromaticity

The chromaticity was measured using a chromaticity measuring device BM-7 (commercially available from TOPGON). In the following Tables 2 and 3, Chromaticity x and Chromaticity y represent values of coordinates x and y, respectively, in a two-dimensional color coordinate.

### (2) Luminance

The luminance was measured using a luminance measuring system (model name: CA-S1500W ver.2.1 commercially available from KONICA MINOLTA).

**Table 2**

| | Typical prism sheets | | | | | | | | | | | |
|---|---|---|---|---|---|---|---|---|---|---|---|---|
| Sample No. | 3M BEF #1 | | | 3M BEF #2 | | | 3M BEF #3 | | | Average | | |
| | Chromaticity x | chromaticity | Luminance | Chromaticity x | Chromaticity y | Luminance | Chromaticity x | Chromaticity y | Luminance | Chromaticity x | Chromaticity y | Luminance |
| 1 | 0.2946 | 0.3076 | 8264 | 0.2936 | 0.3056 | 8931 | 0.2935 | 0.3057 | 9247 | 0.294 | 0.306 | 8814 |
| 2 | 0.2937 | 0.3062 | 7984 | 0.2942 | 0.3065 | 8738 | 0.2939 | 0.3068 | 9184 | 0.294 | 0.307 | 8635 |
| 3 | 0.2932 | 0.3067 | 8284 | 0.2938 | 0.3062 | 8663 | 0.2927 | 0.3056 | 8986 | 0.293 | 0.306 | 8644 |
| 4 | 0.2976 | 0.3122 | 8900 | 0.2968 | 0.31 | 9436 | 0.296 | 0.3094 | 9661 | 0.297 | 0.311 | 9332 |
| 5 | 0.2969 | 0.3112 | 9223 | 0.2963 | 0.3094 | 9653 | 0.2956 | 0.3091 | 9973 | 0.296 | 0.310 | 9616 |
| 6 | 0.2968 | 0.3110 | 9085 | 0.2962 | 0.3093 | 9464 | 0.2956 | 0.3093 | 9618 | 0.296 | 0.310 | 9389 |
| 7 | 0.3019 | 0.3180 | 9618 | 0.3015 | 0.3162 | 10040 | 0.3008 | 0.3157 | 9855 | 0.301 | 0.317 | 9838 |
| 8 | 0.3007 | 0.3180 | 9460 | 0.3005 | 0.3161 | 9839 | 0.2994 | 0.3153 | 9669 | 0.300 | 0.316 | 9656 |
| 9 | 0.3011 | 0.3173 | 9575 | 0.3010 | 0.3153 | 9997 | 0.2998 | 0.3147 | 9689 | 0.301 | 0.316 | 9754 |
| Average | 0.297 | 0.312 | 8933 | 0.2970 | 0.311 | 9418 | 0.296 | 0.3100 | 9542 | 0.297 | 0.311 | 9298 |
| | 9P Uniformity (%) | | 83.0 | 9P Uniformity | | 86.3 | 9P Uniformity | | 90.1 | 9P Uniformity | | 87.8 |

**Table 3**

| Composite sheets according to the present invention | | | | | | | | | | | | |
|---|---|---|---|---|---|---|---|---|---|---|---|---|
| Sample No | Example 1 | | | Example 2 | | | Example 3 | | | Example 4 | | |
| | Chromaticity x | Chromaticity y | Luminance | Chromaticity x | Chromaticity y | | Chromaticity x | Chromaticity y | Luminance | Chromaticity x | Chromaticity y | Luminance |
| 1 | 02943 | 0308 | 8035 | 02926 | 03047 | 8505 | 0293 | 03049 | 8840 | 0293 | 0306 | 8460 |
| 2 | 2936 | 03063 | 7688 | 02936 | 03064 | 8323 | 02934 | 03063 | 8829 | 0294 | 0306 | 8280 |
| 3 | 0293 | 03068 | 7937 | 02932 | 03057 | 8284 | 02922 | 03051 | 8651 | 0293 | 0306 | 8291 |
| 4 | 02973 | 03125 | 8718 | 02963 | 03099 | 9081 | 02956 | 0309 | 9338 | 0296 | 0310 | 9046 |
| 5 | 02968 | 03114 | 8935 | 02958 | 0309 | 9267 | 02953 | 03085 | 9594 | 0296 | 0310 | 9265 |
| 6 | 02966 | 03111 | 8746 | 02958 | 03092 | 9077 | 02954 | 03092 | 9314 | 0296 | 0310 | 9046 |
| 7 | 03014 | 03174 | 9346 | 03006 | 03154 | 9555 | 03 | 03147 | 9567 | 0301 | 0316 | 9489 |
| 8 | 03004 | 03172 | 9113 | 02998 | 03151 | 9342 | 0299 | 03145 | 9405 | 0300 | 0316 | 9287 |
| 9 | 0301 | 03172 | 9306 | 03002 | 03139 | 9432 | 02993 | 03141 | 9452 | 0300 | 0315 | 9397 |
| Average | 0297 | 0312 | 8647 | 0296 | 0310 | 8985 | 0296 | 0310 | 9221 | 0297 | 0311 | 8951 |
| | Compared with 3M | | 93% | Compared with 3M | | 97% | Compared With 3M | | 99% | Compared with 3M | | 96% |
| | 9P Uniformity (%) | | 823 | 9P Uniformity | | 867 | 9P Uniformity | | 902 | 9P Uniformity | | 873 |

From Tables 2 and 3, it could be seen that the composite optical films according to the present invention prepared as one sheet in Examples 1 to 4 to have both of the light concentration and light diffusion characteristics had substantially the same chromaticity coordinate values, compared with the stacked body including a prism sheet currently commercially available from 3M as a market-dominant product and a light diffusing film formed on the prism sheet, and also that the composite optical films according to the present invention had substantially the same luminance (93% to 99%), compared with the stacked body commercially available from 3M. Therefore, it could be confirmed that the composite optical film according to the present invention could be effectively used in a commercial aspect.

As described above, it could be confirmed that the composite optical film according to the present invention can show all the functions as the prism sheet and the light-diffusing sheet since the protrusions having a light diffusion function are formed on the leading ends of the prism pattern of the prism sheet. Therefore, the use of the composite optical film according to the present invention can replace two typical optical sheets of a prism sheet and a light-diffusing sheet with one optical sheet. As a result, the number of processes for manufacturing a backlight unit can be reduced, the production cost can be saved, and the productivity can be improved. Therefore, when the photocurable composition and the method of manufacturing a composite optical film according to the present invention apply to the prism sheet, liquid crystal display diodes used to manufacture portable electronic devices, navigation systems and medium- and large-sized monitors can be effectively manufactured without using a separate light diffusing film.

The composite optical film for backlight units prepared using the photocurable composition according to the present invention has a structure in which the prism sheet is formed integrally with the plurality of protrusions having a light diffusion function directly formed on the leading ends of the prism patterns of the prism sheet. Therefore, the composite optical film for backlight units can be useful in improving the manufacturing productivity of backlight units and saving the manufacturing cost, without degrading the optical characteristics compared with the separate use of tow typical sheets of a prism sheet and a light-diffusing sheet, since the number of manufacturing processes is reduced by replacing the two typical sheets of the prism sheet and the light-diffusing sheet with one sheet.

According to the method of manufacturing a composite optical film for backlight unit according to the present invention, the composite optical film for backlight units showing the above-described characteristics can be effectively mass-produced in an industrial scale using the photocurable composition according to the present invention.

Accordingly, since two sheets of the prism sheet and the light-diffusing sheet can be replaced with one sheet of the composite optical film for backlight units according to the present invention, the composite optical film for backlight units according to the present invention can be effectively used in liquid crystal display diodes used to manufacture portable electronic devices, navigation systems and medium- and large-sized monitors.

It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. A photocurable composition comprising:
60 parts by weight of a (meth)acrylate oligomer having a number average molecular weight of 1,000 to 5,000 and containing 1 to 6 (meth)acrylate moieties;
20 to 40 parts by weight of a (meth)acrylate-based monomer having a molecular weight of less than 1,000 and containing 1 to 6 (meth)acrylate moieties; and
0.5 to 8 parts by weight of a photopolymerization initiator, based on 60 parts by weight of the (meth)acrylate oligomer,
wherein the photocurable composition is coated on leading ends of the prism patterns of the prism sheet for backlight units, and photocured to form protrusions having a light diffusion function on the leading ends of the prism patterns.

2. The photocurable composition according to claim 1, further comprising 1 to 10 parts by weight of at least one resin selected from the group consisting of a methyl methacrylate-butyl(meth)acrylate copolymer, polyester polyurethane, chlorosulfonated polyethylene, chlorinated polyvinyl chloride (PVC), polystyrene, a vinyl chloride-vinyl acetate copolymer, and a butylmethacrylate-methacrylic acid copolymer as a resin dissolved in the (meth)acrylate-based monomer.

3. The photocurable composition according to claim 1, wherein the (meth)acrylate oligomer is at least one selected from the group consisting of an ester-based (meth)acrylate, an epoxy-based (meth)acrylate, and a urethane-based (meth)acrylate.

4. The photocurable composition according to claim 1, further comprising 0.5 parts by weight to 5 parts by weight of at least one adhesion promoter selected from the group consisting of acrylic acid and methoxyphenol.

5. A composite optical film for backlight units comprising:
a prism sheet having a plurality of prism patterns formed on an upper surface thereof so that the plurality of prism patterns are parallel to each other; and
a plurality of protrusions formed on leading ends of the plurality of prism patterns of the prism sheet to have a light diffusion function,
wherein the protrusions having a light diffusion function are cured products of the photocurable composition including the following components:
60 parts by weight of a (meth)acrylate oligomer having a number average molecular weight of 1,000 to 5,000 and containing 1 to 6 (meth)acrylate moieties;
20 to 40 parts by weight of a (meth)acrylate-based monomer having a molecular weight of less than 1,000 and containing 1 to 6 (meth)acrylate moieties; and
0.5 to 8 parts by weight of a photopolymerization initiator, based on 60 parts by weight of the (meth)acrylate oligomer.

6. The composite optical film for backlight units according to claim 5, further comprising 1 to 10 parts by weight of at least one resin selected from the group consisting of a methyl methacrylate-butyl(meth)acrylate copolymer, polyester polyurethane, chlorosulfonated polyethylene, chlorinated PVC, polystyrene, a vinyl chloride-vinyl acetate copolymer, and a butylmethacrylate-methacrylic acid copolymer as a resin dissolved in the (meth)acrylate-based monomer.

7. The composite optical film for backlight units according to claim 5, wherein the (meth)acrylate oligomer is at least one selected from the group consisting of an ester-based (meth)acrylate, an epoxy-based (meth)acrylate, and a urethane-based (meth)acrylate.

8. The composite optical film for backlight units according to claim 5, further comprising 0.5 parts by weight to 5 parts by weight of at least one adhesion promoter selected from the group consisting of acrylic acid and methoxyphenol.

9. A method of manufacturing a composite optical film for backlight units, comprising:
forming a photocurable resin layer on one surface of a polymeric film;
forming a prism sheet having a plurality of prism patterns formed on an upper surface thereof, so that the plurality of prism patterns are parallel to each other, by irradiating the photocurable resin layer with first active light to cure the resin layer while allowing the photocurable resin layer to pass through a roller having prism patterns;
passing the prism sheet, which passes through the roller having the prism patterns, through a coating roller whose surface is coated with the photocurable composition, wherein leading ends of the prism patterns passes through the coating roller so that the leading ends of the prism patterns come in contact with the photocurable composition coated on the coating roller; and
forming a plurality of protrusions having a light diffusion function on the leading ends of the plurality of prism patterns of the prism sheet by irradiating the photocurable composition coated on the leading ends of the prism patterns with second active light to cure the photocurable composition,
wherein the photocurable composition comprises the following components:
60 parts by weight of a (meth)acrylate oligomer having a number average molecular weight of 1,000 to 5,000 and containing 1 to 6 (meth)acrylate moieties;
20 to 40 parts by weight of a (meth)acrylate-based monomer having a molecular weight of less than 1,000 and containing 1 to 6 (meth)acrylate moieties; and
0.5 to 8 parts by weight of a photopolymerization initiator, based on 60 parts by weight of the (meth)acrylate oligomer.
